Europäisches Patentamt

**European Patent Office**

**Office européen des brevets**

(11) Numéro de publication: **0 225 820 B1**

## FASCICULE DE BREVET EUROPEEN

(45) Date de publication de fascicule du brevet: **22.07.92**

(21) Numéro de dépôt: **86402376.7**

(22) Date de dépôt: **23.10.86**

�Intⓒⓘ. Cl.⁵: **F16L 47/00**, F16L 37/12, B29C 53/58

(54) **Raccord de tubes en matériaux composite et méthode pour sa fabrication.**

(30) Priorité: **23.10.85 FR 8515734**

(43) Date de publication de la demande:
**16.06.87 Bulletin 87/25**

(45) Mention de la délivrance du brevet:
**22.07.92 Bulletin 92/30**

(84) Etats contractants désignés:
**BE DE ES GB IT NL**

(56) Documents cités:
**EP-A- 0 083 972**
**US-A- 4 451 069**

(73) Titulaire: **AEROSPATIALE Société Nationale Industrielle**
**37, Boulevard de Montmorency**
**F-75781 Paris Cédex 16(FR)**

(72) Inventeur: **Fuchs, Jean-François**
**211 La Lande Sainte-Hélène**
**F-33480 Castelnau(FR)**

(74) Mandataire: **Lepeudry-Gautherat, Thérèse et al**
**ARMENGAUD JEUNE CABINET LEPEUDRY 52, avenue Daumesnil**
**F-75012 Paris(FR)**

## Description

L'invention concerne un procédé pour réaliser un raccord de tubes en matériau composite, qui est luimême en matériau composite sans aucune partie métallique, ainsi qu'un dispositif de raccordement en comportant application.

Ces matériaux composites sont réalisés à partir de fibres de toute nature comme des fibres de verre ou des fibres de carbone ou encore des fibres aramides liées par des résines, par exemple des résines époxy. Les tubes en matériau composite réalisés par enroulement filamentaire présentent des avantages certains notamment du fait de leur résistance à la fatigue et à la corrosion, de leur moindre poids et de leur coût. Ils se prêtent particulièrement bien à des utilisations dans des domaines particuliers comme la recherche pétrolière en mer ou l'exploitation de l'énergie d'origine géothermique. Dans ce dernier cas notamment, le milieu corrosif que constitue l'eau chaude salée prélevée à grande profondeur pose des problèmes importants de tenue à la corrosion des divers éléments constituant l'installation, par exemple les tubes, les pompes etc... Parmi ces éléments, les tubes de suspension de pompe posent un problème particulier compte tenu du niveau de pression atteint et de la température à laquelle ils sont soumis, et cela en plus de l'environnement corrosif dans lequel ils sont plongés. De surcroît, ces tubes doivent pouvoir être assemblés et désaccouplés périodiquement pour l'entretien de la pompe.

C'est ainsi que s'est imposé pour ce genre d'utilisation le choix de tubes en matériau composite qui remplacent avantageusement les tubes en acier inox spécial utilisés jusqu'à présent dont le coût est d'autant plus élevé qu'un revêtement caoutchouté est nécessaire pour prolonger sa durée de vie et dont le poids rend leur manutention difficile et demande des équipements lourds pour leur mise en place. Cependant le principal problème posé par ces tubes en matériau composite réside dans leur système de raccordement.

On connaît notamment deux types de liaison pour les tubes en matériaux composites réalisés par enroulement filamentaire.

D'abord des liaisons faisant intervenir un embout métallique rapporté ou incoporé au bobinage. On sait que ces embouts doivent être collés ou intégrés à leur support de façon extrêmement solide pour résister à des contraintes sévères et particulièrement à des efforts de traction d'autant plus élevés que le forage est profond. Les procédés de fixation de ces éléments métalliques sur des tubes en matériau composite mettent en oeuvre une succession d'opérations techniques qui vont par exemple d'une première étape d'enduction de colle sur l'embout métallique suivie de séchage et d'application d'un élastomère, à une seconde étape de vulcanisation de l'élastomère et de polymérisation de la colle, puis au collage du matériau composite non encore polymérisé suivi d'une nouvelle polymérisation du tube ainsi réalisé.

Cette technique oui s'avère effectivement satisfaisante pour obtenir des tubes raccordés, résistants à des forces de traction importantes, reste néanmoins délicate et coûteuse à mettre en oeuvre. De plus pour limiter les risques de corrosion, il est impératif d'utiliser des embouts an acier inox spécial d'un prix de revient élevé.

Il semble préférable par conséquent d'utiliser un deuxième type de liaisons dites "tout composite" sans aucune partie métallique comme décrit dans le EP-A-0 083 972 Dans d'autres réalisations, des liaisons appliquées aux tubes an matériau composite sont constituées par des filetages usinés dans une surépaisseur de composite ou de résine pure. Mais pour les utilisations précitées les liaisons filetées sont insuffisantes et les manipulations relatives au serrage des tubes sont difficilement acceptables.

Un but de la présente invention consiste donc en un raccord de tube en matériau composite qui soit aisément réalisable et s'affranchisse des inconvénients précités inhérents aux procédés utilisant un embout métallique ou aux simples systèmes à vissage.

Un objet de la présente invention est un raccord "tout composite" envisagé notamment pour les tubes de suspension de pompe, formé d'un raccord mâle-femelle permettant la jonction de deux tubes par simple emboîtement. Au sujet de ce système d'emboîtement on connaît un type de raccord utilisé par exemple dans le domaine des tuyaux souples fonctionnant à basse pression, qui comporte essentiellement, un embout femelle constitué de plusieurs languettes formant un manchon cylindrique qui s'enclenchent par déformation élastique dans une gorge prévue sur un embout mâle, et une bague de verrouillage coulissante destinée à bloquer cet enclenchement. Ces raccords connus réalisés en matière moulée ou en métal constituent des éléments indépendants auxquels sont reliés les canalisations ou tuyaux en question. Pour relier des tubes en matériau composite répondant aux exigences mentionnées précédemment, il n'est évidemment pas possible de rapporter sur ces tubes des embouts de cette nature même s'ils sont eux-mêmes réalisés en matériau composite.

L'invention propose par conséquent de réaliser un raccord de tubes en matériau composite dont la partie courante ainsi que des embouts mâle et femelle prévus respectivement à chacune de ses extrémités, ont été obtenus par une succession d'opérations générales de bobinage sur l'ensemble du tube, et d'opérations particulières de bobinage aux extrémités pour les organes d'encliquetage, de l'embout femelle sur l'embout mâle. Le raccord de tube selon l'invention est constitué :

a) d'un tube comportant une peau interne en caoutchouc ;

b) d'un embout femelle présentant un profil conique dont la base s'élargit en s'éloignant de la partie courante du tube et déborde l'extrémité de la peau en caoutchouc et comportant un insert disposé au-dessus d'une extrémité dudit tube, un bobinage longitudinal de fibres enroulé autour de la partie courante du tube et dudit insert, dont l'angle par rapport à la génératrice locale du tube est inférieur ou égal à 20°, des lamelles disposées au-dessus desdites couches de fibres et maintenues par un nouvel enroulement circonférentiel de fibres et obtenues par tronçonnage longitudinal, qui débordent de la base de l'embout, et dont l'extrémité formée d'un empilement de fibres est apte à se refermer sur l'embout mâle ;

c) d'un embout mâle comportant un insert ayant un profil trapézoïdal disposé circonférentiellement en bordure d'une extrémité dudit tube, le bobinage longitudinal de fibres enroulé autour de la partie courante du tube étant aussi enroulé autour dudit insert, ainsi qu'un talon butée disposé circonférentiellement sur le tube à côté de l'insert ;

d) d'un bobinage circonférentiel de fibres sur toute la longueur courante du tube ;

e) de gorges annulaires formées sur la surface extérieure dudit enroulement circonférentiel de l'embout femelle, sur la partie terminale de l'embout mâle, ainsi que sur le talon butée ;

f) de joints disposés dans lesdites gorges ;

g) d'un manchon disposé entre lesdits embouts mâle et femelle ayant un diamètre intérieur supérieur au diamètre extérieur de l'embout femelle, mais moins grand que le plus grand diamètre du talon butée, ledit manchon constituant un moyen de raccordement de l'extrémité de l'embout femelle sur l'embout mâle, quand les lamelles après avoir dépassé l'insert de l'embout mâle se referment sur lui et que le manchon a glissé sur le raccord pour venir en butée contre le talon.

L'invention a également pour objet un procédé pour réaliser ledit raccord de tubes en matériau composite qui comprend les étapes suivantes :

a) on forme sur un mandrin par enroulement de bandelettes, une peau en caoutchouc dont la vulcanisation se fera simultanément à la polymérisation du composite ;

b) on bobine circonférentiellement sur chaque extrémité du tube, au-dessus de la peau caoutchouc, des fibres dont la superposition formera la surépaisseur constituant les organes d'accrochage de l'embout mâle et de l'embout femelle, à savoir l'insert en matériau composite, propre à la formation de l'embout mâle réalisé en bordure de l'extrémité du tube et l'insert propre à la formation de l'embout femelle ;

c) on effectue en continu sur toute la longueur du tube et à ses extrémités en recouvrant les inserts, un bobinage longitudinal de fibres dont l'angle par rapport à la génératrice locale du tube est inférieur ou égal à 20° ;

d) on effectue un bobinage circonférentiel de fibres sur toute la longueur courante du tube ;

e) on introduit sur la partie courante du tube le manchon extérieur, préalablement réalisé séparément sur un mandrin par bobinage circonférentiel de fibres dont le diamètre intérieur est supérieur au diamètre extérieur du bobinage au droit des inserts ;

f) on termine la réalisation de l'embout femelle en frettant par-dessus son insert, grâce à un nouvel enroulement circonférentiel, les lamelles, préalablement fabriquées par bobinage de fibres ;

g) on termine la réalisation de l'embout mâle, en réalisant sur l'extrémité de l'enroulement à côté de l'embout mâle, un autre enroulement circonférentiel de fibres formant le talon butée dont le diamètre extérieur est égal au diamètre extérieur du manchon ;

h) on effectue la polymérisation de l'ensemble ;

i) on assure l'usinage complémentaire des gorges dans l'enroulement circonférentiel de l'embout femelle et dans la surépaisseur d'enroulement circonférentiel de l'embout mâle pour placer les joints annulaires d'étanchéité.

La description suivante d'une forme de réalisation prise à titre d'exemple non limitatif, fera apparaître les caractéristiques particulières et avantages de l'invention et permettra de faire comprendre la mise en oeuvre de la présente invention. On se réfère aux dessins annexés qui représentent :

Figure 1 : une vue en coupe de l'extrémité du tube avec un embout femelle.

Figure 2 : une vue en coupe de l'autre extrémité du tube avec un embout mâle.

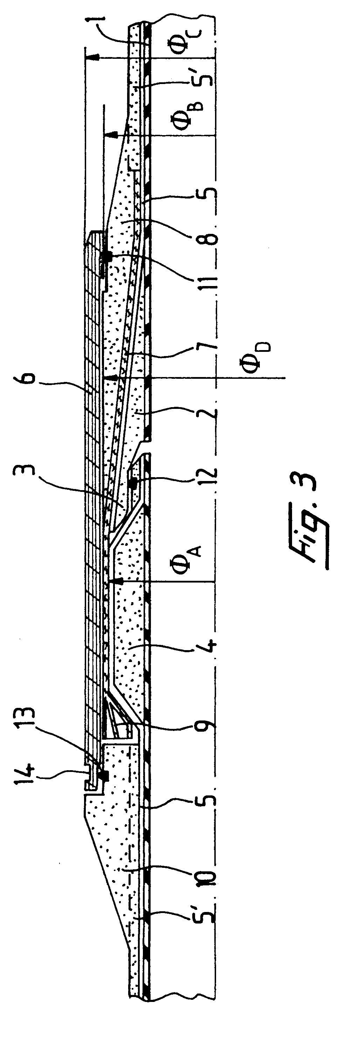

Figure 3 : une vue en coupe partielle de deux extrémités de tube raccordées.

Figure 4 : une vue en perspective partiellement écorchée des embouts mâle et femelle de deux tubes avant leur raccordement.

Figure 5 : une vue en perspective de deux extrémités de tubes raccordés.

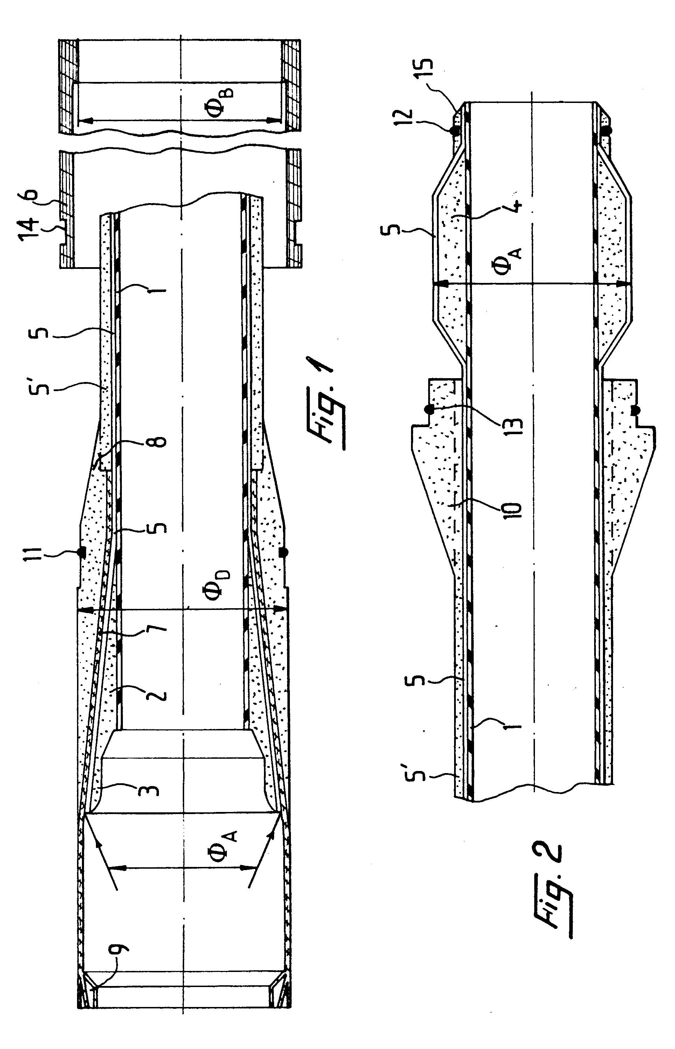

En faisant référence aux figures 1 et 2, on décrit les premières étapes de réalisation d'un tube et de ses embouts d'extrémité. Sur un mandrin non représenté est réalisé un enroulement de bandelettes formant la peau tubulaire 1 en caoutchouc qui sera vulcanisée au moment de la polymérisation du composite. Ensuite on bobine circonférentiellement sur chaque extrémité du tube des fibres dont la superposition formera la surépaisseur constituant les organes d'accrochage de l'embout mâle et de l'embout femelle. L'insert 2 ainsi réalisé visible sur la figure 1 présente un profil conique dont la base 3 déborde de l'extrémité du tube. Cette partie est obtenue par bobinage sur un mandrin non représenté qui lui donne la forme intérieure visible sur le dessin. L'insert 4 visible sur la figure 2 présente un profil trapézoïdal. Il est réalisé en bordure de l'extrémité du tube.

Sur toute la longueur du tube, y compris au-dessus des inserts d'extrémité 2 et 4 est effectué en continu le bobinage de couches 5 de fibres, dites couches longitudinales car l'angle des fibres par rapport à la génératrice locale du tube est inférieur ou égal à 20°. La partie courante du tube est alors complètée d'un enroulement circonférentiel 5' de fibres.

Avant d'aller plus loin dans la réalisation des embouts d'extrémité on introduit sur le tube un manchon 6 dont le diamètre intérieur $\varnothing B$ est supérieur au diamètre extérieur $\varnothing A$ du bobinage 5 au droit des inserts 2,4 et inférieur au diamètre extérieur $\varnothing D$ de l'embout femelle terminé. Le manchon 6 a été préalablement réalisé séparément sur un mandrin par bobinage circonférentiel de fibres, par exemple de fibres de carbone.

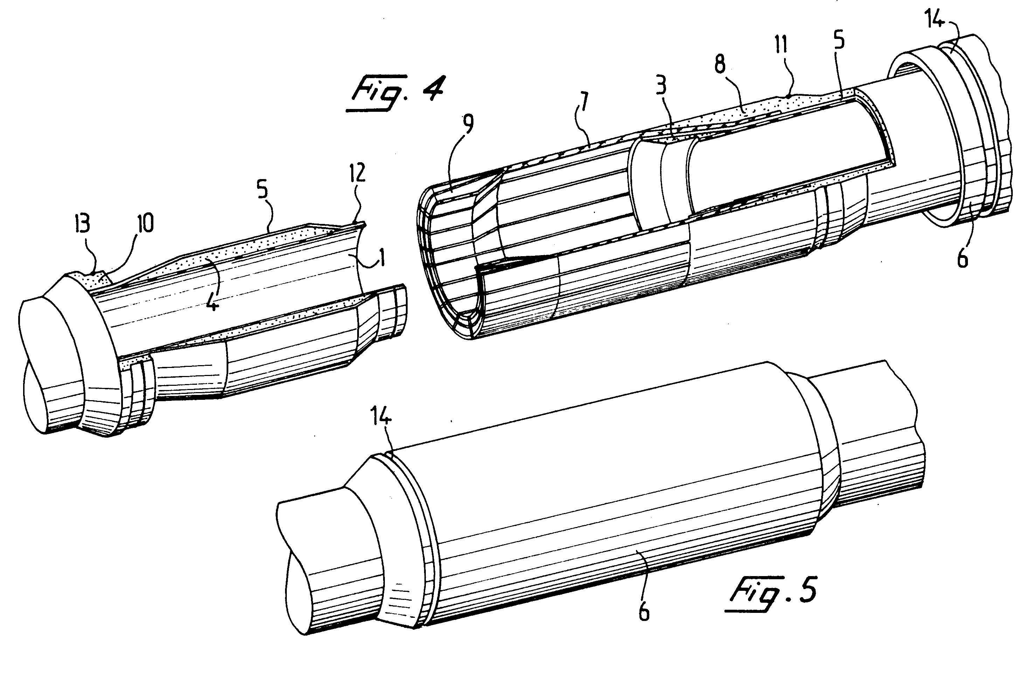

Ensuite, par dessus l'insert 2 de l'embout femelle sont mises en place des lamelles 7 qui débordent de la base 3 de l'insert et sont frettées sur celui-ci par un nouveau bobinage circonférentiel 8. Ces lamelles sont également préalablement réalisées séparément sur un mandrin par bobinage circonférentiel de fibres. L'angle de bobinage $\alpha$ = 0° entre la direction des fibres et l'axe du tube permet de les faire travailler dans la direction de l'effort et confère à ces lamelles une grande résistance à la traction. Leur extrémité 9 est en outre constituée d'un empilement de couches longitudinales et de tissus drapés. Après polymérisation les lamelles sont découpées longitudinalement à l'aide d'une meule diamantée comme on le voit plus précisément à la figure 4.

On effectue sur l'extrémité de l'enroulement 5' coté de l'embout mâle un autre enroulement circonférentiel de fibres 10 formant talon et butée pour le manchon et assurant une fonction d'étanchéité comme on le verra plus loin. Le diamètre extérieur de ce talon 10 est égal au diamètre extérieur $\varnothing C$ du manchon 6. On effectue ensuite à l'extrémité de l'embout mâle une surépaisseur d'enroulement circonférentiel 15 de manière à pouvoir usiner la gorge de joint 12.

La structure des extrémités de tubes étant ainsi réalisée comme le montrent les figures 1 et 2, on peut alors procéder à la polymérisation de l'ensemble du tube.

L'opération ultèrieure avant le retrait du mandrin consiste à usiner des gorges pour les joints d'étanchéité. Un premier joint annulaire 11 sera placé dans une gorge prévue dans l'enroulement circonférentiel 8 de l'embout femelle. Sur l'embout mâle un joint annulaire 12 est prévu à l'extrémité du tube dans une gorge réalisée dans la surépaisseur d'enroulement circonférentiel 15. Un autre joint annulaire 13 est localisé dans une gorge du talon 10.

La figure 4 montre deux extrémités de tubes ainsi réalisés prêts à être raccordés et la figure 5 montre deux tubes raccordés. Ces tubes sont présentés verticalement dans le forage, embout mâle orienté vers le haut. L'embout femelle du tube supérieur est présenté au-dessus de l'embout mâle puis descendu jusqu'à ce que les lamelles 7, après avoir dépassé l'insert 4 de l'embout mâle du fait de leur élasticité, se referment sur ce dernier quand leur extrémité 9 s'est logée dans l'espace annulaire compris entre l'insert 4 et le talon 10. Puis le manchon 6 est glissé vers le bas de façon à maintenir les lamelles serrées. Le manchon réalisé par exemple en fibre de carbone est autoserrant en température du fait du très faible coefficient de dilatation thermique du matériau par rapport au coefficient de dilatation thermique de la fibre, par exemple de la fibre de verre, constituant les embouts d'extrémité des tubes. Simultanément il fait étanchéité sur les joints toriques 11 et 13. Il est descendu jusqu'à venir en contact avec le talon 10 qui fera office de protecteur lors de la descente des tubes dans le forage. Lors de la remontée des tubes, un éventuel accrochage aura pour conséquence d'appliquer le manchon en position fermée sur le talon 10. Une gorge 14 peut être aménagée dans le manchon 6 à l'extérieur pour permettre l'accrochage éventuel d'outillages de mise en place ou de retrait. Les joints 11 et 13 assurent donc l'étanchéité aux fluides extérieurs tandis que le joint 12 assure l'étanchéité intérieure.

Grâce à ce procédé qui permet d'obtenir des embouts d'extrémité faisant partie intégrante du tube, et par conséquent eux-mêmes en matériau composite, on peut effectuer des raccordements de tubes fiables, légers et résistants à la corrosion et qui peuvent aussi être aisément assemblés et désaccouplés périodiquement.

L'exemple de réalisation a été décrit relativement à un tube possédant un embout mâle et un embout femelle. Une variante entrant dans le cadre de la présente invention consisterait à prévoir sur les tubes, soit deux embouts mâles, soit deux embouts femelles. Une autre variante consisterait à bobiner la couche 5 à l'angle $\alpha$ = 0°, ce qui permettrait en prolongeant la couche au-delà de l'extrémité 3 de l'insert 2, de découper longitudinalement des lamelles dans ladite couche 5, et éviterait ainsi la fabrication séparée des lamelles 7.

**Revendications**

1. Raccord de tubes en matériau composite dont la partie courante ainsi que des embouts mâle et femelle prévus respectivement à chacune de ses extrémités, ont été obtenus par une succession d'opérations générales de bobinage sur l'ensemble du tube, et d'opérations particulières de bobinage aux extrémités pour les organes d'encliquetage de l'embout femelle sur l'embout mâle, caractérisé en ce qu'il est constitué :

a) d'un tube comportant une peau interne (1) en caoutchouc ;

b) d'un embout femelle présentant un profil conique dont la base (3) s'élargit en s'éloignant de la partie courante du tube et déborde l'extrémité de la peau en caoutchouc et comportant un insert (2) disposé au-dessus d'une extrémité dudit tube, un bobinage longitudinal (5) de fibres enroulé autour de la partie courante du tube et dudit insert, dont l'angle par rapport à la génératrice locale du tube est inférieur ou égal à 20°, des lamelles (7) disposées au-dessus desdites couches de fibres (5) et maintenues par un nouvel enroulement circonférentiel de fibres et obtenues par tronçonnage longitudinal, qui débordent de la base (3) de l'embout, et dont l'extrémité (9) formée d'un empilement de fibres est apte à se refermer sur l'embout mâle ;

c) d'un embout mâle comportant un insert (4) ayant un profil trapézoïdal disposé circonférentiellement en bordure d'une extrémité dudit tube, le bobinage longitudinal de fibres (5) enroulé autour de la partie courante du tube étant aussi enroulé autour dudit insert, ainsi qu'un talon butée (10) disposé circonférentiellement sur le tube à côté de l'insert ;

d) d'un bobinage circonférentiel de fibres (5') sur toute la longueur courante du tube ;

e) de gorges annulaires formées sur la surface extérieure dudit enroulement circonférentiel (5) de l'embout femelle, sur la partie terminale de l'embout mâle, ainsi que sur le talon butée ;

f) de joints (11, 12, 13) disposés dans lesdites gorges ;

g) d'un manchon (6) disposé entre lesdits embouts mâle et femelle ayant un diamètre intérieur ⌀B supérieur au diamètre extérieur ⌀A de l'embout femelle, mais moins grand que le plus grand diamètre du talon butée, ledit manchon constituant un moyen de raccordement de l'extrémité de l'embout femelle sur l'embout mâle, quand les lamelles (7) après avoir dépassé l'insert (4) de l'embout mâle se referment sur lui et que le manchon a glissé sur le raccord pour venir en butée contre le talon (10).

2. Raccord de tubes selon la revendication 1, caractérisé en ce que le manchon (6) est réalisé en fibres ayant un plus faible coefficient de dilatation thermique, que celui des fibres constituant les embouts d'extrémité.

3. Raccord de tubes selon la revendication 1, caractérisé en ce que l'extrémité (9) des lamelles est constituée d'un empilement de couches longitudinales de fibres dont l'angle entre leur direction et l'axe du tube est égal à zéro ainsi que de tissus drapés.

4. Raccord de tubes selon la revendication 1, caractérisé en ce qu'une gorge (14) est aménagée à l'extérieur du manchon (6) pour permettre l'accrochage d'outillages de mise en place ou de retrait.

5. Procédé pour réaliser un raccord de tubes en matériau composite selon la revendication 1, caractérisé en ce qu'il comprend les étapes suivantes :

a) on forme sur un mandrin par enroulement de bandelettes, une peau (1) en caoutchouc dont la vulcanisation se fera simultanément à la polymérisation du composite ;

b) on bobine circonférentiellement sur chaque extrémité du tube, au-dessus de la peau caoutchouc, des fibres dont la superposition formera la surépaisseur constituant les organes d'accrochage de l'embout mâle et de l'embout femelle, à savoir l'insert (4) en matériau composite, propre à la formation de l'embout mâle réalisé en bordure de l'extrémité du tube et l'insert (2) propre à la formation de l'embout femelle ;

c) on effectue en continu sur toute la longueur du tube et à ses extrémités en recouvrant les inserts (2 et 4), un bobinage longitudinal (5) de fibres dont l'angle par rapport à la génératrice locale du tube est inférieur ou égal à 20° ;

d) on effectue un bobinage circonférentiel de fibres (5') sur toute la longueur courante du tube ;

e) on introduit sur la partie courante du tube le manchon extérieur (6), préalablement réalisé séparément sur un mandrin par bobinage circonférentiel de fibres dont le diamètre intérieur ØB est supérieur au diamètre extérieur ØA du bobinage (5) au droit des inserts (2, 4) ;

f) on termine la réalisation de l'embout femelle en frettant par-dessus son insert (2), grâce à un nouvel enroulement circonférentiel, les lamelles (7), préalablement fabriquées par bobinage de fibres ;

g) on termine la réalisation de l'embout mâle, en réalisant sur l'extrémité de l'enroulement (5') à côté de l'embout mâle, un autre enroulement circonférentiel de fibres formant le talon butée (10) dont le diamètre extérieur est égal au diamètre extérieur ØC du manchon (6)

h) on effectue la polymérisation de l'ensemble ;

i) on assure l'usinage complémentaire des gorges dans l'enroulement circonférentiel (8) de l'embout femelle et dans la surépaisseur d'enroulement circonférentiel (15) de l'embout mâle pour placer les joints annulaires d'étanchéité (11, 12).

## Claims

1. A composite material tube coupling, of which the main part of the tube, as well as its male and female end-pieces, provided, respectively, at each of its ends, have been obtained by a succession of general winding operations over the whole of the tube, and particular winding operations at the ends for the members enabling the snap-fit of the female end-piece on the male end-piece, characterised in that it constitutes:

a) a tube comprising an internal rubber skin (1);

b) a female end-piece having a conical profile, the base (3) of which broadens as it extends from the main part of the tube and extends beyond the end of the rubber skin, and comprising an insert (2) arranged over one end of the said tube, a longitudinal winding (5) of fibres wound around the main part of the tube and the said insert, the angle of which in relation to the local generator of the tube is less than or equal to 20°, strips (7) that are arranged over the said layers of fibres (5), are held by a new circumferential winding of fibres and are obtained by longitudinal truncation, which strips project beyond the base (3) of the end-piece, and the end (9) of which, formed by a stack of fibres, is capable of being closed on the male end-piece;

c) a male end-piece comprising an insert (4) having a trapezoidal profile arranged circumferentially along one end of the said tube, the longitudinal winding of fibres (5) wound around the main part of the tube also being wound around the said insert, as well as a stop heel (10) arranged circumferentially on the tube next to the insert;

d) a circumferential winding of fibres (5') over the entire main length of the tube;

e) annular grooves formed on the outer surface of the said circumferential winding (5) of the female end-piece, on the end part of the male end-piece and on the stop heel;

f) seals (11, 12, 13) arranged in the said grooves;

g) a sleeve (6) arranged between the said female and male end-pieces having an internal diameter Ø B greater than the external diameter Ø A of the female end-piece, but smaller than the greatest diameter of the stop heel, the said sleeve constituting a means for coupling the end of the female end-piece to the male end-piece when the strips (7), after having passed the insert (4) of the male end-piece, are closed on it and the sleeve has slid on the coupling and come to abut against the heel (10).

2. Tube coupling according to claim 1, characterised in that the sleeve (6) is made of fibres having a thermal expansion coefficient that is lower than that of the fibres forming the end-pieces at the ends.

3. Tube coupling according to claim 1, characterised in that the end (9) of the strips is formed by a stack of longitudinal layers of fibres, of which the angle between their direction and the axis of the tube is zero, as well as draped fabric.

4. Tube coupling according to claim 1, characterised in that a groove (14) is made in the outside of the sleeve (6) to enable the attachment of positioning or removing tools.

5. A process for producing a composite material tube coupling according to claim 1, characterised in that it comprises the following steps :

a) a rubber skin (1), the vulcanisation of which will be carried out simultaneously with the polymerisation of the composite, is formed on a mandrel by the winding of strips;

b) there is wound circumferentially on each end of the tube, over the rubber skin, fibres which, superposed, will form the extra-thick portion constituting the attachment mem-

6

bers of the male end-piece and the female end-piece, that is to say the composite material insert (4) adapted for the formation of the male end-piece running along the end of the tube and the insert (2) adapted for the formation of the female end-piece;

c) there is effected continuously over the entire length of the tube and at its ends covering the inserts (2 and 4) a longitudinal winding (5) of fibres of which the angle in relation to the local generator of the tube is less than or equal to 20°;

d) fibres (5') are wound circumferentially over the entire main length of the tube,

e) there is introduced on the main part of the tube an external sleeve (6), previously separately produced on a mandrel by the circumferential winding of fibres, of which the internal diameter ∅ B is greater than the external diameter ∅ A of the winding (5) at the inserts (2, 4);

f) the formation of the female end-piece is finished by binding over its insert (2), by way of a new circumferential winding, strips (7) previously formed by winding fibres;

g) the formation of the male end-piece is finished by forming on the end of the winding (5') next to the male end-piece another circumferential winding of fibres forming the stop heel (10) of which the external diameter is equal to the external diameter ∅ C of the sleeve (6);

h) the whole is polymerised;

i) complementary machining of the grooves in the circumferential winding (8) of the female end-piece and in the thick portion of circumferential winding (15) of the male end-piece is carried out for positioning the annular seals (11, 12).

**Patentansprüche**

1. Rohrverbindungsstück aus Verbundmaterial, dessen normaler Teil ebenso wie eine jeweils an jedem seiner Enden vorgesehene Einsteckmuffe und Muffe durch eine Aufeinanderfolge von generellen Wicklungsvorgängen auf das Rohrganze und von speziellen Wicklungsvorgängen an den Enden für die Einrastmittel der Muffe in der Einsteckmuffe erhalten werden, gekennzeichnet durch:

a) ein Rohr, das eine Innenhaut (1) aus Kautschuk besitzt;

b) eine Muffe, die ein konisches Profil aufweist, dessen Basis (3) sich mit zunehmender Entfernung vom normalen Rohrteil verbreitert und über das Ende der Kautschukhaut hinaussteht, und die ein über einem Ende des Rohrs angeordnetes Einsatzstück (2), eine um das normale Rohrteil und das Einsatzstück herumgewickelte, longitudinale Wicklung (5) von Fasern, deren Winkel bezüglich der lokalen Mantellinie des Rohrs kleiner oder gleich 20° ist, und über den Faserschichten (5) angeordnete, durch eine erneute Umfangsumwicklung mit Fasern gestützte und durch longitudinales Abtrennen erhaltene Lamellen (7), die über die Basis (3) der Muffe hinausstehen und deren von einer Faserschichtung gebildetes Ende (9) geeignet ist, sich über der Einsteckmuffe wieder zu schließen, besitzt;

c) eine Einsteckmuffe, die ein ein trapezförmiges Profil aufweisendes Einsatzstück (4), das in Umfangsrichtung an einem Ende des Rohrs angeordnet ist, die longitudinale, rund um den normalen Teil des Rohrs gewickelte Faserwicklung (5), die auch um das Einsatzstück gewickelt ist, sowie einen auf dem Umfang des Rohrs neben dem Einsatzstück angeordneten Anschlagabsatz (10) besitzt;

d) eine Umfangsumwicklung von Fasern (5') auf der gesamten normalen Länge des Rohrs;

e) ringförmige Vertiefungen, die auf der Außenfläche der Umfangsumwicklung (5) der Muffe, auf dem Endteil der Einsteckmuffe sowie auf dem Anschlagabsatz ausgebildet sind;

f) in den Vertiefungen angeordnete Dichtungen (11, 12, 13);

g) eine zwischen der Einsteckmuffe und der Muffe angeordnete Hülse (6), die einen Innendurchmesser $\Phi_B$ aufweist, der größer als der Außendurchmesser $\Phi_A$ der Muffe, aber kleiner als der größte Durchmesser des Anschlagabsatzes ist, wobei die Hülse ein Mittel zur Verbindung des Endes der Muffe mit der Einsteckmuffe bildet, wenn sich die Lamellen (7) nach Überschreiten des Einsatzstücks (4) der Einsteckmuffe über diesem schließen und die Hülse auf die Verbindung aufgeschoben ist, um gegen den Absatzanschlag (10) zur Anlage zu kommen.

2. Rohrverbindungsstück nach Anspruch 1, dadurch gekennzeichnet, daß die Hülse (6) aus Fasern mit einem Wärmeausdehnungskoeffizienten gefertigt ist, der niedriger ist als jener der die Endansatzstücke bildenden Fasern.

3. Rohrverbindungsstück nach Anspruch 1, dadurch gekennzeichnet, daß das Ende (9) der Lamellen von einer Schichtung longitudinaler Faserschichten, wobei der Winkel zwischen ihrer Richtung und der Rohrachse gleich Null ist, sowie aus drapiertem Gewebe gebildet ist.

4.  Rohrverbindungsstück nach Anspruch 1, dadurch gekennzeichnet, daß auf der Außenseite der Hülse (6) eine Vertiefung (14) angeordnet ist, um das Ankuppeln von Werkzeug für ein Aufschieben oder ein Zurückziehen zu erlauben.

5.  Verfahren zur Herstellung eines Rohrverbindungsstücks aus Verbundmaterial nach Anspruch 1, gekennzeichnet durch die folgenden Schritte:

    a) Bilden einer Haut (1) aus Kautschuk, dessen Vulkanisierung gleichzeitig mit der Polymerisation des Verbundmaterials erfolgt, durch Wicklung von Streifen auf eine Wikkelhülse;

    b) Wickeln von Fasern auf die Kautschukhaut entlang des Umfangs an jedem Ende des Rohrs, deren Übereinanderschichtung den Wulst ausbildet, der die Mittel zum Einrasten der Einsteckmuffe in die Muffe bildet, nämlich das zur Formung der am Rand des Rohrendes realisierten Einsteckmuffe dienende Einsatzstück (4) aus Verbundmaterial und das zur Formung der Muffe dienende Einsatzstück (2);

    c) Ausführen einer auf der gesamten Länge des Rohrs und seinen Enden fortlaufenden, die Einsatzstücke (2 und 4) völlig bedeckenden, longitudinalen Wicklung (5) von Fasern, deren Winkel bezüglich der lokalen Mantellinie des Rohrs kleiner oder gleich 20° ist;

    d) Ausführen einer Umfangswicklung von Fasern (5') über die gesamte normale Länge des Rohrs;

    e) Einführen der äußeren Hülse (6) über den normalen Teil des Rohrs, die zuvor separat durch Umfangswicklung von Fasern auf eine Wickelhülse gefertigt wurde, wobei der Innendurchmesser $\emptyset_B$ größer ist als der Außendurchmesser $\emptyset_A$ der Wicklung (5) auf Höhe der Einsatzstücke (2, 4);

    f) Fertigstellen der Herstellung der Muffe durch Umschnüren der Lamellen (7), die zuvor durch Wicklung von Fasern hergestellt wurden, um ihr Einsatzstück (2) herum unter Verwendung einer neuerlichen Umfangswicklung;

    g) Fertigstellen der Herstellung der Einsteckmuffe, indem eine weitere Umfangsumwicklung auf dem Ende der Umwicklung (5') neben der Einsteckmuffe ausgeführt wird, die den Anschlagabsatz (10) bildet, dessen Außendurchmesser gleich dem Außendurchmesser $\emptyset_C$ der Hülse (6) ist;

    h) Polymerisieren des gesamten Komplexes;

    i) Ausführen einer zusätzlichen Erzeugung von Vertiefungen in der Umfangsumwicklung (8) der Muffe und in dem Wulst der Umfangsumwicklung (15) der Einsteckmuffe, um die abdichtenden ringförmigen Dichtungen (11, 12) anzubringen.

**Fig. 1**

**Fig. 2**

*Fig. 3*

EP 0 225 820 B1

Fig. 4

Fig. 5